# EUROPÄISCHE PATENTANMELDUNG

(11) **EP 0 705 672 A2**
(43) Veröffentlichungstag der Anmeldung: **10.04.1996**
(21) Anmeldenummer: 95115128.1
(22) Anmeldetag: 26.09.1995
(51) Int. Cl.: B29C 33/62, B29C 33/64

(54) **Zusammensetzungen mit Difluor-methoxy-2,2,2-trifluorethan**

(30) Priorität: 06.10.1994 DE 4435638
(71) Anmelder: Solvay Fluor und Derivate GmbH, D-30173 Hannover (DE)
(72) Erfinder: Buchwald, Hans, Dr., D-30952 Ronnenberg (DE); Hellmann, Joachim, D-30171 Hannover (DE); Raszkowski, Boleslaus, D-31719 Wiedensahl (DE)
(74) Vertreter: Lauer, Dieter, Dr.

(57) **Zusammenfassung**

Beschrieben werden flüssige bzw. pastenförmige Zusammensetzungen mit trennmittelwirksamen Eigenschaften, die Difluormethoxy-2,2,2-trifluorethan (E245), insbesondere im Gemisch mit weiteren Lösungsmitteln, und wenigstens ein Agens mit trennmittelwirksamen Eigenschaften enthalten, sowie die Verwendung dieser Zusammensetzungen und ein Verfahren zu deren Herstellung.

## Beschreibung

Die vorliegende Erfindung betrifft flüssige bzw. pastenförmige Zusammensetzungen, die insbesondere Difluormethoxy-2,2,2-trifluorethan (E245) als Lösungsmittel und wenigstens ein Agens mit trennmittelwirksamen Eigenschaften enthalten, sowie die Verwendung dieser Zusammensetzungen und ein Verfahren zu deren Herstellung.

In vielen industriellen Anwendungsgebieten, die Arbeitsvorgänge wie Gießen, Formen, Pressen usw. umfassen - z. B. bei der Herstellung und Verarbeitung von Kunststoffen, Schaumstoffen, Baustoffen, Gummiartikeln, Reifen, Metallen, Gläsern, Keramikprodukten usw. - werden heute Trennmittel, Gleitmittel oder Schalmittel benötigt. Trennmittel sind in diesem Zusammenhang feste oder flüssige Filme, die die Adhäsionskräfte zwischen zwei aneinandergrenzenden Oberflächen verringern, d. h. ihr Verkleben verhindern. Gleitmittel sind Zusatzstoffe für plastische Massen, z. B. Preßmassen und Spritzgußmassen. Sie werden benötigt, um die Füllstoffe leichter gleitend und die Preßmassen damit leichter verformbar zu machen. Die Trenn-, Gleit- bzw. Schalmittel enthalten trennmittelwirksame Komponenten, z. B. in Form von trockenen Pulvern, von trockenen Filmen oder Naßfilmen, Pasten, eingebrannten Filmen, Lösungen oder Dispersionen. Eine Sonderform stellen die sogenannten internen trennmittelwirksamen Komponenten dar, die in das zu entformende Gut eingemischt werden und sich entweder an der Oberfläche anzureichern vermögen oder eine schnellere Aushärtung der Oberfläche bewirken, so daß es zwischen Formwand und Formteil zu keinem Verbund kommt.

Vielfach müssen bei obigen Arbeitsvorgängen von Zeit zu Zeit die Rückstände des Agens mit trennmittelwirksamen Eigenschaften mit Hilfe von Lösungsmitteln aus der Form entfernt werden. Gewöhnlich werden zur Reinigung der Formen Lösungsmittel wie Kohlenwasserstoffe und Chlorkohlenwasserstoffe verwendet, von denen die ersten feuergefährlich sind und die zweiten Hautreizungen verursachen.

Nach einem Verfahren aus der deutschen Offenlegungsschrift DE 25 52 236 ist ein Formtrennmittel für die Herstellung geformter Kautschukprodukte und die Verformung von Polyurethanschaumstoffen bekannt. Die dort verwendete Formtrennmasse enthält Paraffinwachs, Leuchtöl und Natriumseifen von Tallölsäuren in einem paraffinischen Grundöl. Das eingesetzte Formtrennmittel muß in Wasser löslich oder emulgierbar sein, um durch Sprühen oder Waschen mit warmem Wasser das Formtrennmittel vom Formprodukt trennen zu können. Weiterhin sind im Stand der Technik Formtrennmittel beschrieben, die Fluorchlorkohlenwasserstoffe als Hauptlösungsmittel bzw. Dispergiermittel enthalten. Beispielsweise beschreibt die DE 37 31 223 Trennmittelzusammensetzungen mit 1,1-Dichlor-2,2,2-trifluorethan (R123), die DE 39 05 125 Trennmittelzusammensetzungen mit 1,1-Dichlor-1-fluorethan, die DE 40 06 688 Trennmittelzusammensetzungen mit Dichlorpentafluorpropanen (R225). Trotz dieser vielfältigen Ansätze besteht im Stand der Technik immer noch das Problem, günstige Alternativen für geeignete Trennmittelzusammensetzungen aufzufinden.

Die Aufgabe der Erfindung ist es, alternative flüssige bzw. pastenförmige Zusammensetzungen von Agenzien mit trennmittelwirksamen Eigenschaften bereitzustellen, die eine sparsame Verwendung gestatten und die ohne häufiges Reinigen der benutzten Formen verwendet werden können.

Die Aufgabe wird gelöst durch die in den Patentansprüchen angegebenen erfindungsgemäßen Zusammensetzungen, Verwendungen und Verfahren.

Die vorliegende Erfindung stellt flüssige bzw. pastenförmige Zusammensetzungen mit verbesserten Eigenschaften zur Verfügung, die ein Lösungsmittel und mindestens ein Agens mit trennmittelwirksamen Eigenschaften und gegebenenfalls weitere für Trennmittel übliche Zusätze aus der Gruppe der Colösungsmittel bzw. Lösungsvermittler, Korrosionsinhibitoren und Stabilisatoren und Konsistenzregler enthalten, wobei als Hauptlösungsmittel Difluormethoxy-2,2,2-trifluorethan (E245) enthalten ist und das trennmittelwirksame Agens in einer Menge von 0,1 bis 10 Gew.-%, vorzugsweise 0,1 bis 7 Gew.-%, bezogen auf die gesamte Zusammensetzung (100 Gew.-%) vorliegt. Die Menge an E245 in den erfindungsgemäßen Zusammensetzungen beträgt mindestens 50 Gew.-%, vorzugsweise 50 bis 80 Gew.-%, wobei der Rest auf 100 Gew.-% sich auf die gegebenenfalls enthaltenen üblichen Zusätze verteilt.

Das Hauptlösungsmittel E245 liegt in bevorzugten erfindungsgemäßen Zusammensetzungen im Gemisch mit einem weiteren Lösungsmittel vor. Das weitere Lösungsmittel (Colösungsmittel) neben E245 kann in diesen Gemischen ausgewählt sein aus der Gruppe wasserstoffhaltiger Fluorchlorkohlenwasserstoffe (HFCKW), wasserstoffhaltiger Fluorkohlenwasserstoffe (HFKW), Fluorkohlenwasserstoffe (FKW), Chlorkohlenwasserstoffe (CKW), nichthalogenierter aliphatischer Kohlenwasserstoffe, Alkohole, Ether, Ketone usw. Mit diesen Colösungsmitteln kann E245 in den erfindungsgemäßen Zusammensetzungen auch in Form eines azeotropartigen Gemisches oder als Azeotrop enthalten sein. Das Colösungsmittel dient im Gemisch mit E245 insbesondere als Lösungsvermittler für das in den erfindungsgemäßen Zusammensetzungen enthaltene trennmittelwirksame Agens. Das Colösungsmittel bzw. der Lösungsvermittler ist in diesen bevorzugten Zusammensetzungen in einer Menge von 10 bis 49,9 Gew.-%, vorzugsweise von 13 bis 49,9 Gew.-%, enthalten. Die Prozentangaben beziehen sich hierbei auf die Gesamtzusammensetzung.

Beispiele für Colösungsmittel sind z. B. HFCKW wie insbesondere 1,1-Dichlor-1-fluorethan (R141b), 1,1-Dichlor-2,2,2-trifluorethan (R123), Tetrachlormonofluorethan, Trichlordifluorethan, Monochlorhexafluorpropan, Dichlorpentafluorpropan oder deren Gemische; oder z. B. HFKW bzw. FKW wie insbesondere 1,1,1,2-Tetrafluorethan (R134a), 1,1,1-Trifluorethan (R143a), Pentafluorethan (R125), Difluormethan (R32), 1,1,2-Trifluorethan (R143), Trifluormethan (R23), 1,1-Difluorethan (R152a), Tetrafluormethan (R14), Hexafluorethan (R116); aliphatische nichthalogenierte Kohlenwasserstoffe sind insbesondere übliche Kohlenwasserstoff-Fraktionen, z. B. Benzinfraktionen.

Bevorzugte Lösungsvermittler sind aliphatische Kohlenwasserstoffe, vorzugsweise Benzinfraktionen mit einem Siedebereich von z. B. 100 bis 140 °C.

Die erfindungsgemäßen Zusammensetzungen werden weiterhin dadurch gekennzeichnet, daß das trennmittelwirksame Agens ausgewählt ist aus der Gruppe der Wachse, Silikone, Metallseifen, synthetischen Öle und anorganischen Pulver. Bevorzugt sind Wachse. Die trennmittelwirksamen Agentien können in den erfindungsgemäßen Zusammensetzungen gegebenenfalls auch kombiniert eingesetzt werden.

Als Wachse im Sinne der Erfindung werden insbesondere natürliche Wachse tierischer oder pflanzlicher Herkunft, vorzugsweise natürliche Wachse mit einem Erweichungspunkt von mindestens 40 °C, eingesetzt.

Weitere Wachse, die in der vorliegenden Erfindung verwendet werden, sind synthetische Wachse, vorzugsweise Paraffinwachse oder Polyethylenwachse. In einer Variante wird z. B. ein oxidiertes Polyethylenwachs mit mittlerem Molekulargewicht von 3.700 bis 4.500 (viskosimetrisch) und einer Säurezahl von 20 bis 30 und einem Schmelzpunkt von 89 bis 99 °C eingesetzt.

In einer anderen Art der erfindungsgemäßen Zusammensetzungen sind Silikone enthalten. Die verwendeten Silikone können in Form von Ölen, Fetten oder Harzen vorliegen, die im Handel erhältlich sind. Solche Silikone können als solche oder in Form von Silikonemulsionen, die gegebenenfalls noch einen Konsistenzregler (z.B. hochdisperse Kieselsäure) in das Silikonöl eingearbeitet enthalten, oder in Form von Silikonpasten, die gewöhnlich Metallseifen als Konsistenzregler enthalten, verwendet werden.

Eine Variante der Erfindung ist dadurch gekennzeichnet, daß die Zusammensetzungen Metallseifen, beispielsweise fettsaure Salze der Metalle Magnesium, Calcium, Zink, Aluminium oder Blei enthalten. Gegebenenfalls werden die Metallsalze der Stearinsäure eingesetzt, wobei dann das Magnesiumstearat bevorzugt ist. Eine weitere Variante von Zusammensetzungen im Sinne der Erfindung enthält anorganische Puder, vorzugsweise Graphit, Talkum oder Glimmer. Es können weiterhin auch andere übliche Agentien mit trennmittelwirksamen Eigenschaften wie synthetische Öle, z. B. Esteröle, in erfindungsgemäßen Zusammensetzungen verwendet werden.

Bei den erfindungsgemäßen Zusammensetzungen kann es vorgesehen sein, zusätzlich bis zu 1 Gew.-% bekannter Korrosionsinhibitoren zuzusetzen. Solche Korrosionsinhibitoren für Metalle wie z. B. Magnesium, Aluminium, Titan, Messing, Bronze, Stahl sind kommerziell verfügbar. Sie basieren zumeist auf Zusammensetzungen, die organische Verbindungen mit Heteroatomen wie Schwefel oder insbesondere Stickstoff enthalten. Bewährt haben sich z. B. einzelne Verbindungen oder Gemische aus der Klasse der Benzothiazole, z. B. Mercaptobenzothiazol, Benzimidazole, z. B. 2-Phenylbenzimidazol, Triazole, z. B. Benzotriazole, Tolyltriazole, Oxazoline, z. B. Alkyl- und/oder Hydroxyalkyl-substituierte Oxazoline, Amide, Amine, z. B. tert. Amine. Weiterhin können den erfindungsgemäßen Zusammensetzungen gegebenenfalls übliche Stabilisatoren zugesetzt werden. Weiterhin können konsistenzregelnde Additive enthalten sein.

Die erfindungsgemäßen Zusammensetzungen liegen entweder als Dispersionen oder Pasten vor, wobei unter Dispersionen sowohl Emulsionen als auch Suspensionen verstanden werden.

Die Erfindung umfaßt auch die Verwendung der erfindungsgemäßen Zusammensetzungen als Trenn-, Gleit- bzw. Schalmittel, z. B. bei der Kunststoff- oder Schaumstoffherstellung oder in anderen Anwendungsbereichen.

Weiterhin umfaßt die Erfindung das Verfahren zur Herstellung der erfindungsgemäßen Zusammensetzungen, wobei man in das Lösungsmittel E245 oder in die Lösungsmittelgemische mit E245 ein oder mehrere Agentien mit trennmittelwirksamen Eigenschaften in einer auf die gesamte Zusammensetzung bezogenen Menge von 0,1 bis 10 Gew.-%, vorzugsweise 0,1 bis 7 Gew.-%, einarbeitet. Gegebenenfalls werden gleichzeitig übliche Lösungsvermittler oder andere Zusätze wie Stabilisatoren, Korrosionsinhibitoren und Konsistenzregler zugegeben.

Die erfindungsgemäßen Zusammensetzungen mit E245 als Hauptlösungsmittel weisen verbesserte adhäsionsvermindernde Eigenschaften, hohe chemische Indifferenz und gutes Spreitungsvermögen auf. Gegenüber üblichen Trennmitteln, bei denen Kohlenwasserstoffe als Lösungsmittel verwendet werden, besitzen die erfindungsgemäßen Zusammensetzungen einen höheren Flammpunkt. Weiterhin ist der Einsatz der erfindungsgemäßen Zusammensetzungen anstelle herkömmlicher Trennmittelzusammensetzungen ökonomischer, da bei gleicher Anwendung weniger Trennmittelzusammensetzung verbraucht wird. Zusätzliche Vorteile zeigen sich bei längerer Verwendung der Formen z. B. darin, daß die verwendeten Formen zwischen den Arbeitsgängen seltener gereinigt werden müssen.

Die nachfolgenden Beispiele sollen die Erfindung näher erläutern, ohne sie jedoch in ihrem Umfang zu begrenzen.

### Beispiel 1:

Eine erfindungsgemäße Zusammensetzung wurde hergestellt aus 6 Gew.-% Polyethylenwachs (Schmelzpunkt 89 - 99 °C) und 80 Gew.-% Difluormethoxy-2,2,2-trifluorethan (E245) sowie 14 Gew.-% Kohlenwasserstoff (Benzinfraktion 100 - 140 °C).
Die Zusammensetzung war eine Dispersion und wies hervorragende trennmittelwirksame Eigenschaften auf.

### Beispiele 2 bis 6:

Analog zu Beispiel 1 wurden die weiteren in der folgenden Tabelle wiedergegebenen Beispiele 2 bis 6 von erfindungsgemäßen Zusammensetzungen hergestellt, die ebenfalls hervorragende trennmittelwirksame Eigenschaften besitzen. Die Komponenten sind in Gew.-% angegeben.

| | **Beispiel** | | | | |
|---|---|---|---|---|---|
| **Zusammensetzungsbestandteile** | **2** | **3** | **4** | **5** | **6** |
| E-245 | 99,9 | 80 | 76 | 50 | 50 |
| Silikonöl (20.000 m²/s) | 0,1 | | | | |
| Paraffin (Schmelzpunkt 56 - 58 °C) | | | | | 4 |
| Polyethylenwachs (Schmelzpunkt 89 - 99 °C) | | | | 10 | |
| Polyethylenwachs Schmelzpunkt 98 - 108 °C) | | 4 | 5 | | |
| Magnesiumstearat | | | 1 | | |
| Benzinfraktion 100 - 140 °C | | 16 | 18 | 40 | 46 |
| | D* | D | D | P | D |
| D = Dispersion P = Paste | | | | | |

| | | | | | |
|---|---|---|---|---|---|
| * (Die Dispersion zeigte leichtes, reversibles Absetzverhalten; durch leichtes Schütteln konnte jederzeit wieder eine einwandfreie Dispersion erhalten werden.) | | | | | |

## Patentansprüche

1. Flüssige oder pastenförmige Zusammensetzung aus einem Lösungsmittel und mindestens einem Agens mit trennmittelwirksamen Eigenschaften, dadurch gekennzeichnet, daß die Zusammensetzung als Hauptlösungsmittel Difluormethoxy-2,2,2-trifluorethan (E245) sowie gegebenenfalls weitere für Trennmittel übliche Zusätze aus der Gruppe der Colösungsmittel oder Lösungsvermittler, Korrosionsinhibitoren, Stabilisatoren und Konsistenzregler enthält, wobei das trennmittelwirksame Agens in einer Menge von 0,1 bis 10 Gew.-%, vorzugsweise 0,1 bis 7 Gew.-%, bezogen auf die Gesamtzusammensetzung vorliegt.

2. Zusammensetzung nach Anspruch 1, dadurch gekennzeichnet, daß das trennmittelwirksame Agens ausgewählt ist aus der Gruppe Wachse, Silikone, Metallseifen, synthetische Öle und anorganische Pulver, vorzugsweise Wachse.

3. Zusammensetzung gemäß Anspruch 2, dadurch gekennzeichnet, daß die Wachse natürliche Wachse tierischer oder pflanzlicher Herkunft, vorzugsweise natürliche Wachse mit einem Erweichungspunkt von mindestens 40 °C, sind.

4. Zusammensetzung gemäß Anspruch 2, dadurch gekennzeichnet, daß die Wachse synthetische Wachse, vorzugsweise Paraffinwachse oder Polyethylenwachse, sind.

5. Zusammensetzung gemäß Anspruch 2, dadurch gekennzeichnet, daß die Metallseifen vorzugsweise fettsaure Salze der Metalle Magnesium, Calcium, Zink, Aluminium oder Blei, vorzugsweise Salze der Stearinsäure dieser Metalle, sind.

6. Zusammensetzung gemäß Anspruch 2, dadurch gekennzeichnet, daß die anorganischen Pulver Graphit, Talkum oder Glimmer sind.

7. Zusammensetzung gemäß Anspruch 1, dadurch gekennzeichnet, daß übliche Lösungsvermittler in Mengen von 10 bis 49,9 Gew.-%, vorzugsweise 13 bis 49,9 Gew.-%, bezogen auf die Gesamtzusammensetzung enthalten sind.

8. Zusammensetzung gemäß Anspruch 7, dadurch gekennzeichnet, daß als Lösungsvermittler aliphatische Kohlenwasserstoffe, vorzugsweise Benzinfraktionen mit einem Siedebereich von z. B. 100 bis 140 °C, enthalten sind.

9. Verwendung von Zusammensetzungen gemäß einem der vorangehenden Ansprüche als Trenn-, Gleit- bzw. Schalmittel.

10. Verfahren zur Herstellung von Zusammensetzungen gemäß einem der Ansprüche 1 bis 8, dadurch gekennzeichnet, daß man in das Lösungsmittel Difluormethoxy-2,2,2-trifluorethan ein oder mehrere Agenzien mit trennmittelwirksamen Eigenschaften in einer auf das Gesamtgemisch bezogenen Menge von 0,1 bis 10 Gew.-%, vorzugsweise 0,1 bis 7 Gew.-%, sowie gegebenenfalls übliche Zusätze aus der Gruppe der Colösungsmittel oder Lösungsvermittler, Korrosionsinhibitoren, Stabilisatoren und Konsistenzregler einarbeitet.
